# EUROPEAN PATENT SPECIFICATION

(11) **EP 4 585 348 B1**
(45) Date of publication and mention of the grant of the patent: **24.06.2026**
(21) Application number: 25173911.6
(22) Date of filing: 29.03.2011
(51) Int. Cl.: B23K 11/14, B23K 11/36, B21K 23/00

(54) **RESISTANCE WELDED STRUCTURE, RESISTANCE WELDING METHOD, WELDED MEMBER AND MANUFACTURING METHOD THEREOF**
WIDERSTANDSGESCHWEISSTE STRUKTUR, WIDERSTANDSSCHWEISSVERFAHREN, GESCHWEISSTES ELEMENT UND HERSTELLUNGSVERFAHREN DAFÜR
STRUCTURE SOUDÉE PAR RÉSISTANCE, PROCÉDÉ DE SOUDAGE PAR RÉSISTANCE, ÉLÉMENT SOUDÉ ET SON PROCÉDÉ DE FABRICATION

(30) Priority: 01.04.2010 JP 2010085283
(43) Date of publication of application: 16.07.2025
(62) Divisional of application: 11765549.8
(73) Proprietor: Vehicle Energy Japan Inc., Hitachinaka-shi, Ibaraki 312-8505 (JP)
(72) Inventor: ONOSE, Shin, Ibaraki, 312-8503 (JP); NAKATANI, Shinya, Ibaraki, 312-8503 (JP); YUKITA, Hisashi, Ibaraki, 312-8503 (JP)
(74) Representative: MERH-IP Matias Erny Reichl Hoffmann Patentanwälte PartG mbB

(56) References cited:
- WO-A1-2007/083697
- DE-A1- 3 113 754
- JP-A- 2003 048 074

## Description

### Technical Field

The present invention relates to the resistance welding structure, the resistance welding method which use projection welding, the constitution of a member to be welded on which a projection is formed and a manufacturing method thereof, and more particularly to the constitution of a projection forming portion in the resistance welding structure and a member to be welded.

### Background Art

Resistance welding is a welding method where a member to be welded is locally heated by resistance heat generation, and a heated portion is joined under an action of a pressurizing force. As one kind of the resistance welding method, there has been known so-called projection welding where a projection is formed on one of a plurality of members to be welded which are joined to each other, a pressurizing force and an electric current are applied between the respective members to be welded in a state where the projection is made to abut on the other member to be welded, and the respective members to be welded are joined to each other by focusing the pressurizing force and the electric current to the abutting portion between the projection and the other member to be welded. The projection welding can focus the pressurizing force and the electric current on a small area and hence, the excellent thermal balance can be acquired so that various products having excellent joining quality can be manufactured.

Conventionally, as a method of forming a projection on a member to be welded, there has been usually used a method where a dotted or linear pressurizing force is applied from a back surface side of the member to be welded so that a dotted or linear projection is extruded on a surface side of the member to be welded. According to this method, an indentation is formed on a back surface side of the member to be welded by pressurizing so that a wall thickness of the projection becomes smaller than a thickness of a raw material. Further, recently, there has been also proposed a technique which performs projection welding using a member to be welded which forms a dotted or linear projection on a surface side thereof without forming indentation on a back surface side of the member to be welded (see patent literature 1, for example) . Additionally, DE 31 13 754 A1 discloses a member to be welded falling within the wording of the introductory portion of claim 1.

### Citation List

### Patent Literature

PTL 1: JP 2005-259920 A
PTL 2: DE 31 13 754 A1

### Summary of Invention

### Technical Problem

Out of the members to be welded to which the conventional projection welding is applied, in the member to be welded where a pressurizing force is applied from a back surface side and projection is extruded on a surface side, as described previously, a wall thickness of the projection becomes smaller than a wall thickness of the raw material and hence, the projection has low rigidity so that the projection is deformed by a pressurizing force at the time of performing resistance welding. Further, since the thickness of the projection is decreased, the electric resistance at the time of performing resistance welding is increased due to the decrease of an energizing path whereby portions other than a contact portion with a counterpart member also generate heat and are softened. Accordingly, the projection is liable to cause buckling at the time of performing resistance welding so that a proper pressurizing force is not applied to a joining portion whereby a welding defect such as sputtering or a void is liable to occur in the joining portion thus giving rise to a drawback that it is difficult to acquire stable joining property.

On the other hand, when the member to be welded disclosed in patent document 1 is used, the projection has high rigidity so that the occurrence of a welding defect caused by buckling of the projection can be eliminated. However, also with respect to this member to be welded, in the same manner as the conventional member to be welded where the projection is extruded from the back surface side of the raw material, a total thickness of the member to be welded in a projection forming portion becomes a total value of a thickness of the raw material and a height of the projection whereby a resistance value between resistance welding electrodes is high. Accordingly, it is difficult to eliminate a drawback that the heat generation in a peripheral portion of the projection is large so that a heat affected zone extends in a wide range or the deformation of the projection becomes excessively large.

The present invention has been made to overcome such drawbacks of the related art, and it is an object of the present invention to provide the resistance welding structure and a resistance welding method which can form a highly reliable welded part by applying a proper pressurizing force and a proper heat value to a joining portion, and it is also an object of the present invention to provide a member to be welded which is suitable for carrying out these resistance welding structure and resistance welding method, and a method of manufacturing the member to be welded.

### Solution to Problem

The above-mentioned object is solved by the invention as claimed. Claim 1 defines a member to be welded for which protection is sought. Its dependent claims concern particular embodiments of the invention as claimed in claim 1. Claim 10 defines a resistance welding method for which protection is sought. Its dependent claim concerns a particular embodiment of the invention as claimed in claim 10. Claim 8 defines a battery for which protection is sought. Claim 9 defines a dynamo electric machine for which protection is sought.

### Brief Description of Drawings

Fig. 1 is a cross-sectional view showing an essential part of a member to be welded according to a first embodiment, which is an embodiment not falling within the wording of claim 1.
Fig. 2 is a cross-sectional view showing an essential part of a member to be welded according to a second embodiment, which is an embodiment not falling within the wording of claim 1.
Fig. 3 is a cross-sectional view showing an essential part of a member to be welded according to a third embodiment.
Fig. 4 is an explanatory view showing the constitution of a press apparatus which is used for manufacturing the member to be welded according to the first embodiment and a method of manufacturing the member to be welded according to the first embodiment which uses the press apparatus.
Fig. 5 is an explanatory view showing the constitution of a press apparatus used for manufacturing the members to be welded according to the second embodiment and the third embodiment and a method of manufacturing the members to be welded according to the second embodiment and the third embodiment which uses the press apparatus.
Fig. 6 is a constitutional view of various members to be welded manufactured by the manufacturing method according to the present invention.
Fig. 7 is an explanatory view of a member to be welded which is formed into a ribbon shape.
Fig. 8 is a constitutional view of a resistance welder which is used for carrying out a resistance welding method according to the present invention.
Fig. 9 is a cross-sectional view of an essential part showing a first example of the resistance welding structure which makes use of the member to be welded according to the first embodiment.
Fig. 10 is a cross-sectional view of an essential part showing a second example of the resistance welding structure which makes use of the member to be welded according to the first embodiment.
Fig. 11 is a cross-sectional view of an essential part showing a third example of the resistance welding structure which makes use of the member to be welded according to the first embodiment.
Fig. 12 is a cross-sectional view of an essential part showing a fourth example of the resistance welding structure which makes use of the member to be welded according to the first embodiment.
Fig. 13 is a cross-sectional view of an essential part showing a fifth example of the resistance welding structure which makes use of the member to be welded according to the first embodiment.
Fig. 14 is a cross-sectional view of an essential part showing one example of the resistance welding structure which makes use of the member to be welded according to the second embodiment.
Fig. 15 is a cross-sectional view of an essential part showing one example of the resistance welding structure which makes use of the member to be welded according to the third embodiment.
Fig. 16 is a cross sectional view of an essential part showing a first example of a parallel welding method.
Fig. 17 is a cross sectional view of an essential part showing a second example of the parallel welding method.
Fig. 18 is an explanatory view of a cylindrical battery. Fig. 18 does not depict a member to be welded falling within the wording of claim 1.
Fig. 19 is an explanatory view of a vehicle AC generator. Fig. 19 does not depict a member to be welded falling within the wording of claim 1.

### Description of Embodiments

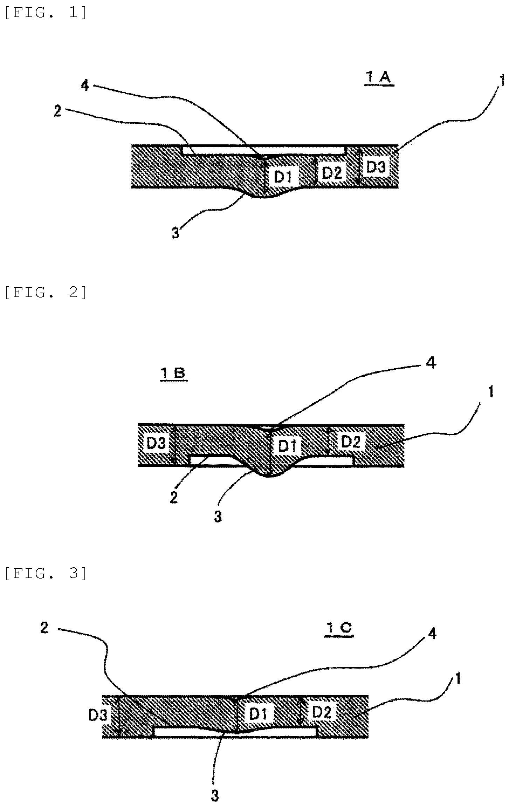

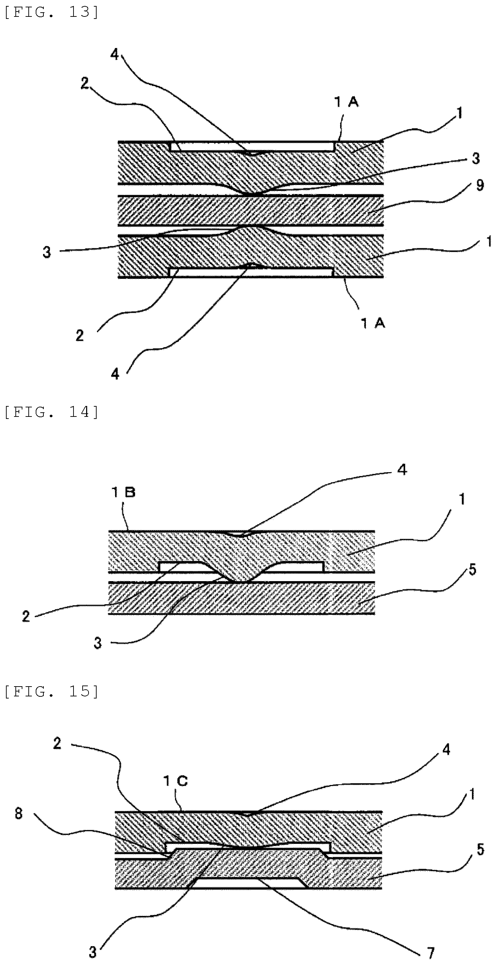

Hereinafter, embodiments are explained, whereby only each of Fig. 3 and Fig. 15 shows an embodiment falling within the wording of claim 1.

### [Constitution of member to be welded]

In a member to be welded 1A according to a first embodiment, as shown in Fig. 1, a recessed portion 2 is formed on one surface of a raw material 1 formed of a metal plate, a projection 3 is formed on a back surface of the recessed portion 2, and an indentation 4 is formed on a bottom surface of the recessed portion 2 at a position corresponding to a distal end of the projection 3. In a member to be welded 1B according to a second embodiment, as shown in Fig. 2, the recessed portion 2 is formed on one surface of the raw material 1 formed of a metal plate, a projection 3 is formed on a bottom surface of the recessed portion 2, and the indentation 4 is formed on a back surface of the recessed portion 2 at a position corresponding to a distal end of the projection 3. A distal end of the projection 3 projects to the outside of the recessed portion 2. In a member to be welded 1C according to a third embodiment, as shown in Fig. 3, in the same manner as the member to be welded 1B according to the second embodiment, the projection 3 is formed on a bottom surface of the recessed portion 2, and the indentation 4 is formed on a back surface of the recessed portion 2 at a position corresponding to a distal end of the projection 3. However, the distal end of the projection 3 is accommodated in the inside of the recessed portion 2. The indentation 4 is automatically formed along with the formation of the projection 3 as explained later in detail in a column "a method of manufacturing a member" to be welded.

As shown in Fig. 1 to Fig. 3, assuming a height of the projection 3 (a height from a bottom portion of the indentation 4 to the distal end of the projection) as D1, a plate thickness of the raw material 1 in the inside of the recessed portion 2 and around the periphery of the projection 3 as D2, and a plate thickness of the raw material 1 outside the recessed portion 2 as D3, the member to be welded 1A according to the first embodiment and the member to be welded 1B according to the second embodiment have the relationship of D1>D2<D3, and the member to be welded 1C according to the third embodiment has the relationship of D1≈D2<D3.

By constituting the members to be welded 1A, 1B, 1C in this manner, a wall thickness of the projection 3 can be set equal to or larger than the plate thickness D2 of the raw material 1 in the inside of the recessed portion 2 and around the periphery of the projection 3. Accordingly, the projection 3 having high rigidity can be formed, and a resistance value at the time of energization can be made small so that the heat generation can be suppressed. Further, since the recessed portion 2 is formed around the projection 3, a heat affected zone can be suppressed to a narrow range by a shape effect of such a constitution. Accordingly, buckling of the projection 3 and the expansion of the heat affected zone can be prevented at the time of performing a welding operation so that welding quality of a welded part can be favorably improved.

### [Method of manufacturing member to be welded]

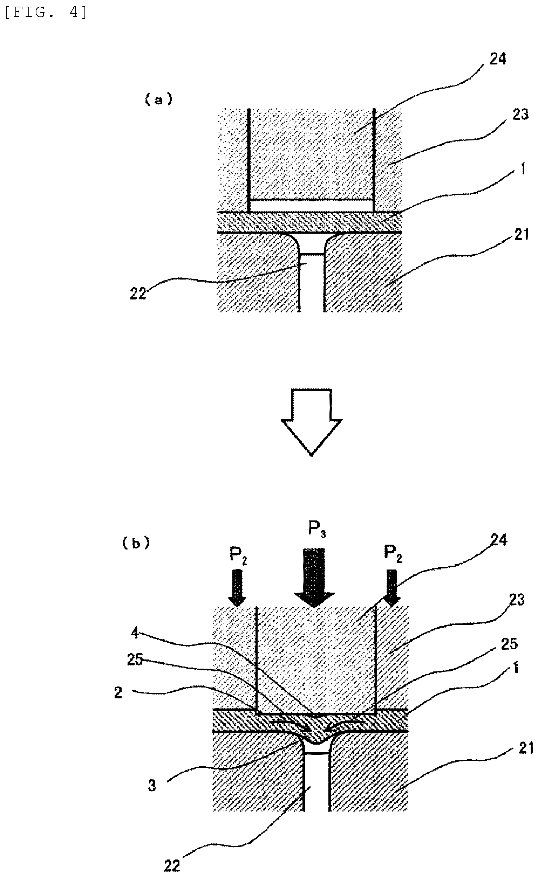

Firstly, the constitution of a press apparatus used for manufacturing the member to be welded 1A according to the first embodiment and a method of manufacturing the member to be welded 1A according to the first embodiment using the press apparatus are explained in conjunction with Fig. 4(a), (b). As shown in Fig. 4(a), (b), the press apparatus of this example is constituted of: a pair of molds 21, 23 which are arranged on a front surface side and a back surface side of the raw material 1 and fix the raw material; and a forming punch 24 which is vertically movably mounted on the mold 23 and locally applies a pressurizing force to the raw material 1. A forming hole 22 is formed in the mold 21 at a position corresponding to the forming punch 24.

In manufacturing the member to be welded 1A according to the first embodiment, as shown in Fig. 4(a), the raw material 1 is fixed by the pair of molds 21, 23 and, thereafter, as shown in Fig. 4(b), while applying a desired pressing force P2 which does not generate the plastic deformation in the raw material 1 to the molds 21, 23, the forming punch 24 is driven so as to apply a pressurizing force P3 for plastic deformation which is larger than the pressing force P2 to one surface of the raw material 1. Accordingly, the recessed portion 2 corresponding to a shape of a distal end portion of the forming punch 24 is formed on a pressing force applied portion of the raw material 1. Further, a plastic flow 25 is generated in a portion of the raw material 1 by receiving the pressurizing force P3, and the portion of the raw material 1 where the plastic flow 25 is generated flows into the inside of the forming hole 22 so that the projection 3 having a desired shape and a desired size is formed on a back surface side of the recessed portion 2. Further, the portion of the raw material 1 where the plastic flow 25 is generated flows into the inside of the forming hole 22 whereby the indentation 4 is formed on the bottom surface of the recessed portion 2 at a position corresponding to the distal end of the projection 3. The pressing force P2 which is applied to the molds 21, 23 and the pressing force P3 which is applied to the forming punch 24 are adjusted such that the size relationship among the respective parts becomes D1>D2<D3.

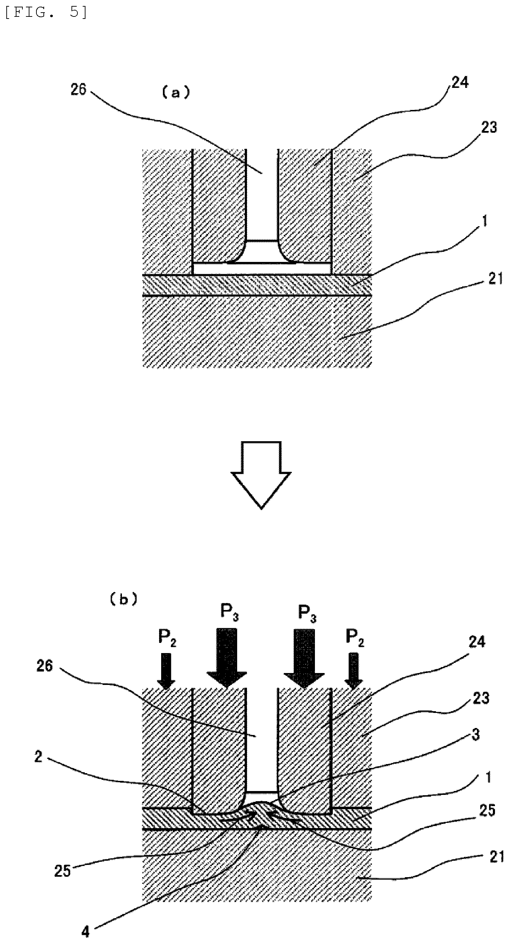

Next, the constitution of a press apparatus used for manufacturing the members to be welded 1B, 1C according to the second embodiment and the third embodiment and a method of manufacturing the members to be welded 1B, 1C according to the second embodiment and the third embodiment using the press apparatus are explained in conjunction with Fig. 5(a), (b) . As shown in Fig. 5(a), (b), the press apparatus of this example is characterized in that the forming hole 22 is not formed in a mold 21 and a forming hole 26 is formed in the forming punch 24. Other parts are equal to the corresponding parts of the press apparatus shown in Fig. 4(a), (b) and hence, the explanation is omitted by giving the same symbol to the corresponding parts.

In manufacturing the members to be welded 1B, 1C according to the second embodiment and the third embodiment, as shown in Fig. 5(a), the raw material 1 is fixed by the pair of molds 21, 23 and, thereafter, as shown in Fig. 5(b), while applying a desired pressing force P2 which does not generate the plastic deformation in the raw material 1 to the molds 21, 23, the forming punch 24 is driven so as to apply a pressurizing force P3 for plastic deformation which is larger than the pressing force P2 to one surface of the raw material 1. Accordingly, the recessed portion 2 corresponding to a shape of a distal end portion of the forming punch 24 is formed on a pressing force applied portion of the raw material 1. Further, the plastic flow 25 is generated in a portion of the raw material 1 by receiving the pressurizing force P3, and the portion of the raw material 1 where the plastic flow 25 is generated flows into the inside of the forming hole 26 so that the projection 3 having a desired shape and a desired size is formed. Further, a portion of the raw material 1 where the plastic flow 25 is generated flows into the inside of the forming hole 26 whereby the indentation 4 is formed on the back surface of the recessed portion 2 at a position corresponding to the distal end of the projection 3. The pressing force P2 which is applied to the molds 21, 23 and the pressing force P3 which is applied to the forming punch 24 are adjusted such that the size relationship among the respective parts becomes D1>D2<D3 with respect to the member to be welded 1B according to the second embodiment and the size relationship among the respective parts becomes D1≈D2<D3 with respect to the member to be welded 1C according to the third embodiment.

By manufacturing the members to be welded 1A, 1B and 1C using the above-mentioned respective methods, the projection 3 having a desired shape and a desired size can be manufactured with precision by performing a press step one time and hence, the manufacturing efficiency of the members to be welded 1A, 1B and 1C can be enhanced.

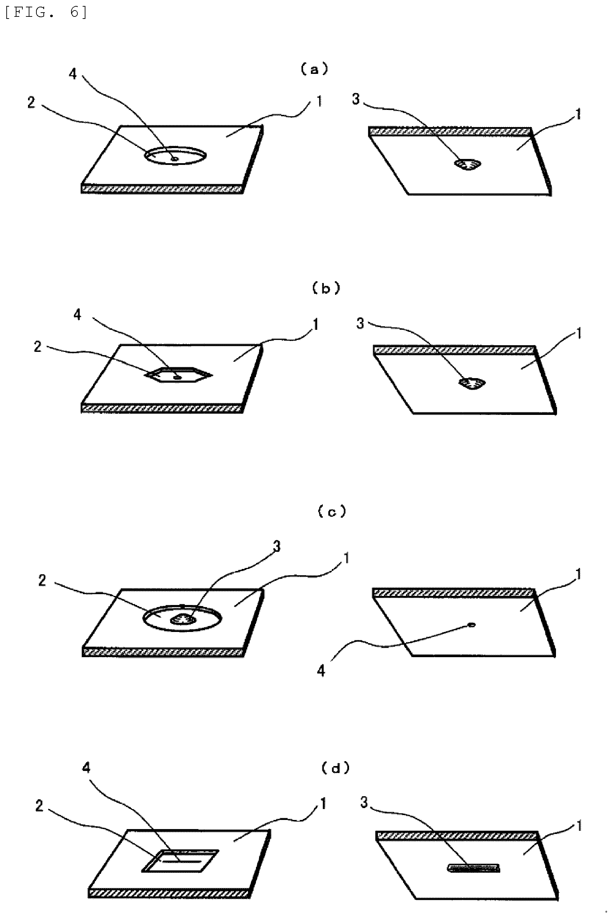

By changing a shape of the forming punch 24 and a shape of the forming hole 26, members to be welded having various recessed portions 2 and projections shown in Fig. 6(a) to (d) can be formed. Fig. 6(a) shows an example where the circular recessed portion 2 is formed using the circular columnar forming punch 24 and the conical projection 3 is formed on a back surface side of the recessed portion 2. Fig. 6(b) shows an example where the hexagonal recessed portion 2 is formed using the hexagonal columnar forming punch 24 and the conical projection 3 is formed on a back surface side of the recessed portion 2. Fig. 6(c) shows an example where the circular recessed portion 2 is formed using the circular columnar forming punch 24 and the conical projection 3 is formed on a bottom surface of the recessed portion 2. Fig. 6(d) shows an example where the angular recessed portion 2 is formed using the angular columnar forming punch 24 and the linear projection 3 is formed on a back surface side of the recessed portion 2.

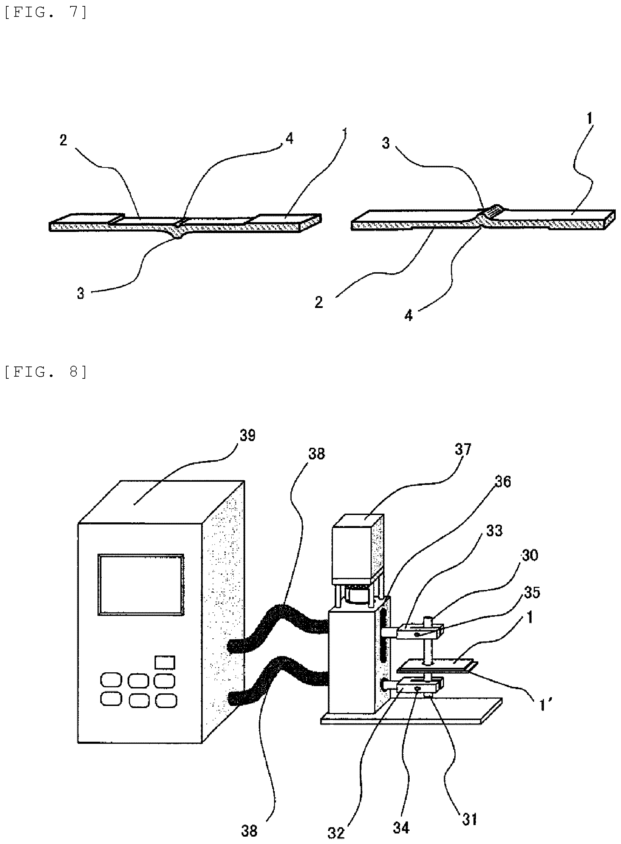

Further, by suitably applying cutting working to the members to be welded shown in Fig. 6(d), it is also possible to form a ribbon-shaped member to be welded shown in Fig. 7. Although the press apparatuses shown in Fig. 4 and Fig. 5 are respectively provided with the press mold 23, the press mold 23 is not an indispensable constitutional member, and a desired member to be welded can be formed using a press apparatus which is not provided with the press mold 23.

### [Resistance welding structure and resistance welding method]

Firstly, the constitution of a resistance welder used for carrying out the resistance welding structure and the resistance welding method according to the present invention is explained in conjunction with Fig. 8. As shown in Fig. 8, the resistance welder according to this example includes: a welding power source 39, electrode holders 32, 33 which are connected to the welding power source 39 via secondary conductors 38; a welding head 36 which holds the electrode holders 32, 33; a fixed electrode 31 which is mounted on the electrode holder 32 by a clamp bolt 34; a movable electrode 30 which is mounted on the electrode holder 33 by a clamp bolt 35; and a pneumatic cylinder 37 which is mounted on the welding head 36 and vertically moves the electrode holder 33 and the movable holder 30. Joining of members to be welded 1, 1' can be performed in such a manner that the members to be welded 1, 1' are inserted between the fixed electrode 31 and the movable electrode 30 in a state where the movable electrode 30 is retracted to an upper side and, thereafter, the members to be welded 1, 1' are sandwiched by a distal end portion of the fixed electrode 31 and a distal end portion of the movable electrode 30 by driving the pneumatic cylinder 37, and at a stage where a pressurizing force applied to the members to be welded 1, 1' reaches a predetermined value, a welding current can be supplied to the respective electrodes 30, 31 via the secondary conductors 38 from the welding power source 39.

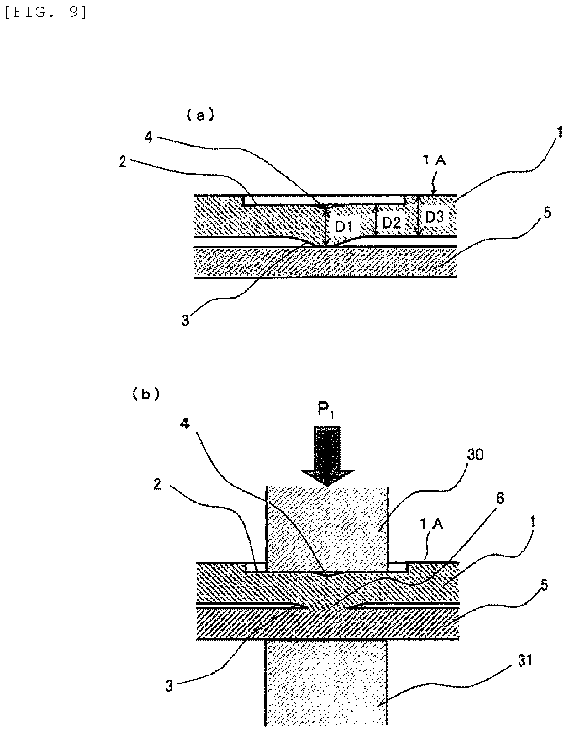

Fig. 9 to Fig. 13 show the resistance welding structure and the resistance welding method when the member to be welded 1A according to the first embodiment is used. Fig. 9(a), (b) show the resistance welding structure and the resistance welding method relating to the joining between the member to be welded 1A of the first embodiment and a flat-plate-shaped member to be welded 5 on which a projection is not formed. In joining these respective members to be welded 1A, 5 to each other, firstly, as shown in Fig. 9(a), one surface of the member to be welded 5 is made to abut on the projection 3 formed on the member to be welded 1A, and the member to be welded 5 is fixed. Next, as shown in Fig. 9(b), the movable electrode 30 of the resistance welder shown in Fig. 8 is made to abut on a bottom surface of a recessed portion 2 formed on the member to be welded 1A, and the fixed electrode 31 is made to abut on a back surface of the member to be welded 5 at a position corresponding to the movable electrode 30, and in a state where a pressurizing force P1 is applied between the members to be welded 1A, 5, a welding current supplied from the welding power source 39 is applied between the respective electrodes 30, 31. With the supply of the welding current, a contact surface between the projection 3 formed on the member to be welded 1A and the other member to be welded 5 which is formed in a flat plate shape is heated by heat generation due to electric resistance generated at the time of energization so that, as shown in Fig. 9(b), a joining portion 6 is formed on the contact surface by solid phase joining or melt joining. Accordingly, the members to be welded 1A, 5 are integrally joined to each other.

According to this resistance welding method, although the pressurizing force P1 is applied to the projection 3 at the time of joining, the indentation 4 which is formed on a surface of the member to be welded 1A opposite to the projection 3 of the member to be welded 1A to which the resistance welding method of this example is applied is small so that a cavity formed between the movable electrode 30 and the member to be welded 1A becomes small whereby the rigidity of the projection 3 can be ensured and the deformation of the member to be welded 1A by the pressurizing force P1 can be made small. Further, it is possible to ensure a sufficient contact area between the movable electrode 30 and the member to be welded 1A and hence, density of a welding current applied between the movable electrode 30 and the member to be welded 1A can be lowered whereby damage on the member to be welded 1A can be prevented thus prolonging a lifetime of the electrode 30. Further, the recessed portion 2 is formed on the member to be welded 1A and hence, a distance from the movable electrode 30 to a distal end of the projection 3 is short so that the heat generation of the member to be welded 1A per se can be lowered. Further, since the plate thickness D2 of the raw material 1 in the inside of the recessed portion 2 is set thinner than the plate thickness D3 of the raw material 1 outside the recessed portion 2, heat can be easily concentrated on the projection 3 whereby it is possible to make only the joining portion 6 efficiently generate heat thus realizing the stable and high-quality joining with small influence of heat.

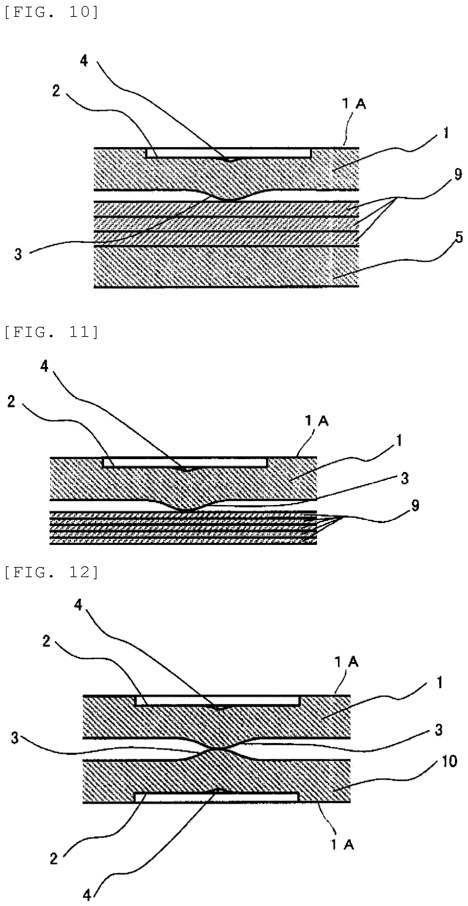

In the example shown in Fig. 9(a), (b), the member to be welded 1A according to the first embodiment is joined to another flat-plate- shaped member to be welded 5 on which the projection 3 is not formed. However, the gist of the first embodiment, which is an embodiment not falling within the wording of claim 1, is not limited to such structure, and is applicable to various other resistance welding structures. For example, as shown in Fig. 10, a plurality of flat-plate-shaped members to be welded 9 having a small plate thickness are sandwiched between the member to be welded 1A according to the first embodiment and one flat -plate- shaped member to be welded 5 having a large plate thickness, and these members are integrally joined to each other. The number of the flat-plate-shaped members to be welded 9 having a small plate thickness may be one. Further, as shown in Fig. 11, the member to be welded 1A according to the first embodiment and a plurality of flat-plate-shaped members to be welded 9 having a small plate thickness may be integrally joined to each other. Further, as shown in Fig. 12, the two members to be welded 1A according to the first embodiment may be integrally joined to each other by making the projections 3 abut on each other. Still further, as shown in Fig. 13, in a state where the projections 3 are directed inwardly, the two members to be welded 1A according to the first embodiment and the flat-plate-shaped member to be welded 9 which is sandwiched between these two members to be welded 1A may be integrally joined to each other.

Fig. 14 shows the resistance welding structure when the member to be welded 1B according to the second embodiment is used. In the example shown in Fig. 14, the member to be welded 1B according to the second embodiment and the flat-plate-shaped member to be welded 5 on which a projection is not formed are integrally joined to each other via the projection 3. Although not shown in the drawing, the constitution and the number of other members to be welded which are joined to the member to be welded 1B according to the second embodiment are not limited, and various resistance welding structures may be constituted by combining the member to be welded 1B according to the second embodiment with other desired members to be welded (see Fig. 10 to Fig. 13). Further, as a resistance welder, the resistance welder shown in Fig. 8 can be used, and the member to be welded 1B according to the second embodiment can be joined using a resistance welding method substantially equal to the resistance welding method which uses the member to be welded 1A according to the first embodiment.

Fig. 15 shows the resistance welding structure when the member to be welded 1C according to the third embodiment is used. In the example shown in Fig. 15, the member to be welded 1C according to the third embodiment and another member to be welded 5 are integrally joined to each other via the projection 3. In the resistance welding structure of this example, as another member to be welded 5, as shown in Fig. 15, a member to be welded on which a curved portion 7 which is insertable in the inside of the recessed portion 2 formed in the member to be welded 1C of the third embodiment is formed is used. Joining of the respective members is performed by making the projection 3 formed on the member to be welded 1C according to the third embodiment abut on an outer surface 8 of the curved portion 7. As a resistance welder, the resistance welder shown in Fig. 8 can be used, and the member to be welded 1C according to the third embodiment can be joined using a resistance welding method substantially equal to the resistance welding method which uses the member to be welded 1A according to the first embodiment.

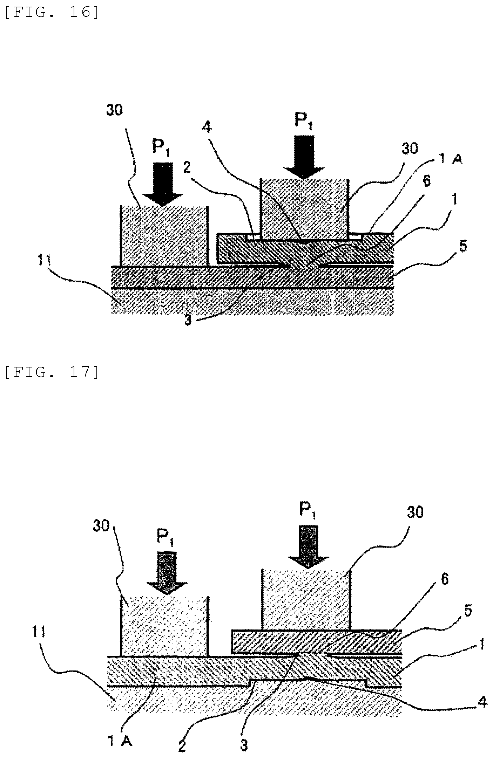

In the examples shown in Fig. 9 to Fig. 15, the explanation has been made by taking the case where, using the resistance welder shown in Fig. 8, a pressurizing force is applied to the predetermined member to be welded by sandwiching the member to be welded between the movable electrode 30 and the fixed electrode 31, and the resistance welding is performed as an example. However, these examples are not limited to such a case, and the desired resistance welding structure can be also acquired by so-called parallel welding where the movable electrode 30 and the fixed electrode 31 are arranged parallel to each other. Fig. 16 shows one example, wherein the member to be welded 5 formed into a flat plate shape is placed on a support member 11, and the projection 3 of the member to be welded 1A according to the first embodiment is made to abut on an upper surface of the member to be welded 5. In such a state, the movable electrodes 30 are made to abut on the upper surface of the member to be welded 5 and a bottom surface of the recessed portion 2 formed on the member to be welded 1A according to the first embodiment and the pressurizing force P1 is applied to the movable electrodes 30, and a welding current is supplied between these two movable electrodes 30. Due to such resistance welding structure, the joining portion 6 formed by solid phase joining or melting joining is formed on a contact surface between the members to be welded 1A, 5. Advantageous effects substantially equal to the previously mentioned advantageous effects can be also acquired by the parallel welding method.

Fig. 17 shows the second example. Contrary to the example shown in Fig. 16, the member to be welded 1A according to the first embodiment is placed on the support member 11, and the member to be welded 5 formed into a flat plate shape is made to abut on the projection 3 formed on the member to be welded 1A according to the first embodiment. In such a state, the movable electrodes 30 are respectively made to abut on an upper surface of the member to be welded 1A according to the first embodiment and an upper surface of the member to be welded 5 and the pressurizing force P1 is applied to the movable electrodes 30, and a welding current is supplied between these two movable electrodes 30. Due to such resistance welding structure, the joining portion 6 formed by solid phase joining or melting joining is formed on a contact surface between the members to be welded 1A, 5.

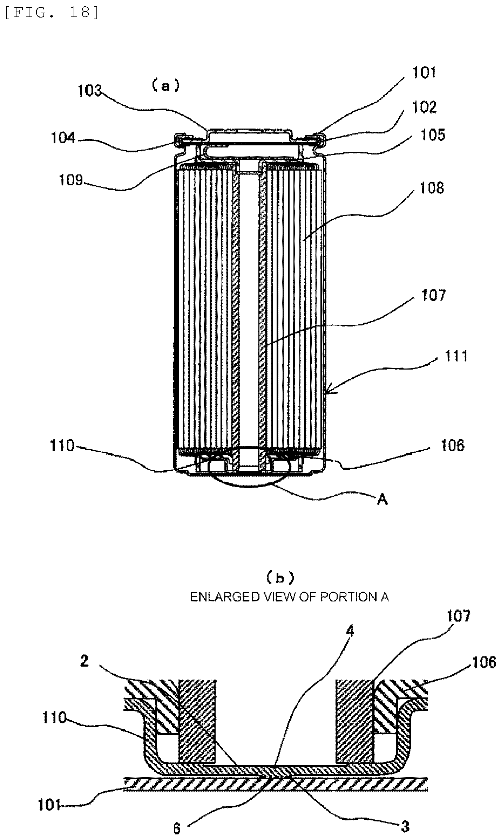

Hereinafter, a cylindrical battery to which the resistance welding structure, the resistance welding method and the member to be welded according to the present invention may be applied is explained. The cylindrical battery of this example is a secondary battery, and as shown in Fig. 18(a), (b), in a secondary battery 111, a positive-pole collector part 105 and a negative-pole collector part 106 are mounted on a group of electrodes 108 wound around a resin-made core 107, and these parts are housed in the inside of a battery case 101. Out of the group of electrodes 108, the negative-pole electrodes are connected to the negative-pole collector part 106 by welding or the like, and are electrically connected to the battery case 101 via a negative-pole lead 110.

The resistance welding structure, the resistance welding method and the member to be welded according to the present invention may be used for joining the battery case 101 and the negative-pole lead 110. That is, the recessed portion 2 and the projection 3 are formed on the negative-pole lead 110, the group of electrodes 108, the positive-pole collector part 105 and the negative-pole collector part 106 are housed in the inside of the battery case 101 and, thereafter, a resistance welding electrode is made to pass through the center of the core 107 and is brought into contact with the recessed portion 2 formed on the negative-pole lead 110, and a resistance welding electrode is brought into contact with an outer side of a bottom surface of the battery case 101 so that the negative-pole lead 110 and the battery case 101 are sandwiched by the resistance welding electrodes, and a pressure is applied to the resistance welding electrodes and, thereafter, a welding current of a resistance welder is applied between the resistance welding electrodes so that a bottom portion of the battery case 101 and the projection 3 of the negative-pole lead 110 are welded to each other by the joining portion 6. Thereafter, the inside of the battery case 101 is filled with an electrolytic solution. An electrically-conductive upper lid portion which is configured to seal an opening portion of the battery case 101 is mounted on the positive-pole collector part 105, and the upper lid portion is constituted of an upper lid 103 and an upper lid case 104. One end of a positive pole lead 109 is welded to the upper lid case 104, and the other end of the positive pole lead 109 is welded to the positive-pole collector part 105 so that the upper lid portion and positive poles of the group of electrodes 108 are electrically connected with each other. A gasket 102 is provided between the battery case 101 and the upper lid case 104. The opening portion of the battery case 101 is sealed by the gasket 102, and the battery case 101 and the upper lid case 104 are electrically insulated from each other by the gasket 102. The secondary battery 111 is constituted as described above.

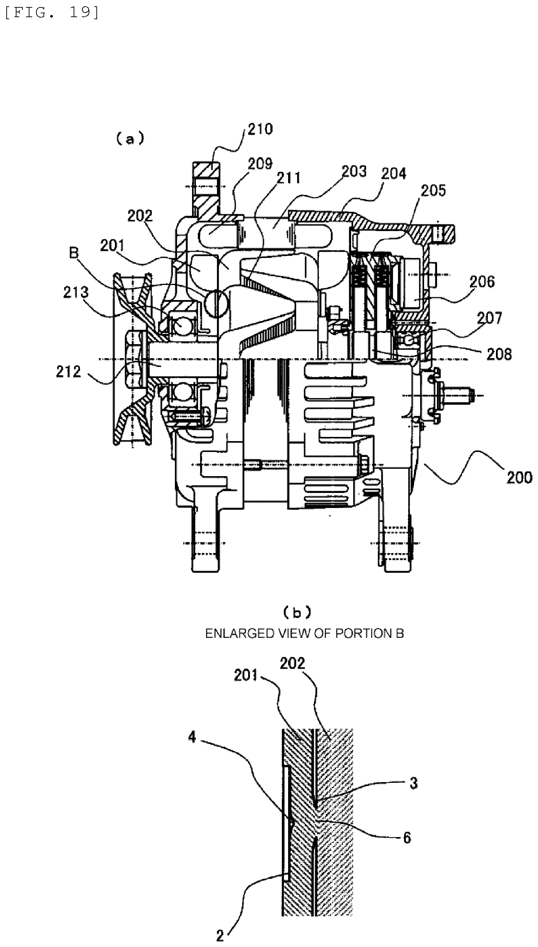

Next, a vehicle AC generator to which the resistance welding structure, the resistance welding method and the member to be welded according to the present invention may be applied is explained. As shown in Fig. 19(a), (b), in a vehicle AC generator 200, a stator coil 209 is mounted on a stator core 203 on a fixed side, and electric power is generated when a pole core 202 having a magnetic field coil 211 on a rotary side is rotated. Since the vehicle AC generator 200 generates heat at the time of power generation, a centrifugal fan 201 for cooling is joined to the pole core 202. The resistance welding structure, the resistance welding method and the member to be welded according to the present invention may be utilized for joining the centrifugal fan 201 for cooling and the pole core 202. That is, recessed portions 2 and projections 3 are formed on the centrifugal fan 201 for cooling, the projections 3 formed on the centrifugal fan 201 for cooling are brought into contact with the pole core 202, resistance welding electrodes not shown in the drawing are brought into contact with a bottom surface of the recessed portion 2 formed on the centrifugal fan 201 for cooling and the pole core 202, and a welding current is supplied to the resistance welding electrodes so that contact surfaces of the projection 3 and a contact surface of the pole core 202 are joined to each other by electric resistance heat at the time of energization.

The plurality of projections 3 are formed on the centrifugal fan 201 for cooling around the center of rotation at equal intervals. In this example, the number of projections 3 is set to 6. The joining of the centrifugal fan 201 for cooling and the pole core 202 is performed simultaneously with respect to the plurality of projections 3. Due to such an operation, operation efficiency is enhanced, and joining quality of the respective joining portions 6 is made uniform.

### Reference Signs List

1A, 1B, 1C: member to be welded, 2: recessed portion, 3: projection, 4: indentation, 5: member to be welded, 6: joining portion, 7: curved portion, 8: outer surface of curved portion, 9: member to be welded, 11: support member, 21: forming mold, 22: forming hole, 23: press mold, 24: forming punch, 25: plastic flow, 26: forming hole, 30: movable electrode, 31: fixed electrode, 32: electrode holder, 33: electrode holder, 34: clamp bolt, 35: clamp bolt, 36: welding head, 37: pneumatic cylinder, 38: secondary conductor, 39: welding power source, 101: battery case, 102: gasket, 103: upper lid, 104: upper lid case, 105: positive-pole collector part, 106: negative-pole collector part, 107: core, 108: group of electrodes, 109: positive-pole lead, 110: negative-pole lead, 200: vehicle AC generator, 201: centrifugal fan for cooling, 202: pole core, 203: stator core, 204: end frame, 205: brush holder, 206: regulator, 207: bearing, 208: slip ring, 209: stator coil, 210: end frame, 211: magnetic field coil, 212: shaft, 213: bearing

## Claims

1. A member to be welded (1B, 1C) where a projection (3) is formed on a raw material (1) formed of a metal plate, wherein
a recessed portion (2) is formed on one surface of the raw material (1),
the projection (3) is formed on a bottom surface of the recessed portion (2),
an indentation (4) is formed on a back surface of the recessed portion (2) at a position corresponding to a distal end of the projection (3), and
assuming a plate thickness of the raw material (1) in the inside of the recessed portion (2) and around the periphery of the projection (3) as D2 and a plate thickness of the raw material (1) outside the recessed portion (2) as D3, the plate thicknesses of the respective portions have the relationship of D2<D3 and assuming a height from a bottom portion of the indentation (4) to a distal end of the projection (3) as D1, the relationship between the height D1 and the plate thickness D2 of the raw material (1) in the inside of the recessed portion (2) and around the periphery of the projection (3) is set to D1>D2, wherein
the member to be welded (1B, 1C) is **characterized in that**:
a distal end of the projection (3) is arranged in the inside of the recessed portion (2).

2. The member to be welded (1B, 1C) according to claim 1, wherein a distal end of the projection (3) projects to the outside of the recessed portion (2).

3. A resistance welding structure, wherein the member to be welded (1B, 1C) according to claim 1 and another member to be welded (5) which is joined to the member to be welded (1B, 1C) according to claim 1 are joined to each other via the projection (3).

4. The resistance welding structure according to claim 3, wherein a member to be welded on which the projection (3) is not formed is used as the another member to be welded (5), and the projection (3) is joined to one surface of the another member to be welded (5) on which the projection (3) is not formed.

5. The resistance welding structure according to claim 3, wherein the member to be welded (1B, 1C) on which the projection (3) is formed is used as the another member to be welded (5), and the projections (3) which are formed on the respective members to be welded are joined to each other.

6. The resistance welding structure according to claim 3, wherein a member to be welded where the projection (3) is formed on a bottom surface of the recessed portion (2) and a distal end of the projection (3) is arranged in the inside of the recessed portion (2) is used as the member to be welded on which the projection (3) is formed, a member to be welded on which a curved portion (7) which is insertable into the inside of the recessed portion (2) is formed is used as the another member to be welded (5), and the projection (3) is joined to an outer surface (8) of the curved portion (7) in the recessed portion (2).

7. The resistance welding structure according to any one of claims 3 to 6, wherein the resistance welding structure includes a plurality of members to be welded (9) on each of which the projection (3) is not formed, and the member to be welded on which the projection (3) is formed and the member to be welded on which the projection (3) is not formed and which is brought into contact with the member to be welded on which the projection (3) is formed are joined to each other via the projection (3), and the members to be welded on each of which the projection (3) is not formed are joined to each other in a spotted manner at a position facing to the projection (3).

8. A battery comprising a battery case (101) and a negative pole lead (110) and a resistance welding structure according to any one of claims 3 to 6, wherein the plurality of members to be welded (9) are the battery case (101) and the negative pole lead (110) which constitute a battery (111).

9. A dynamo-electric machine comprising a pole core (202) and a centrifugal fan (201) and a resistance welding structure according to any one of claims 5 to 6, wherein the plurality of members to be welded (9) are the pole core (202) and the centrifugal fan (201) for cooling which constitute a dynamo-electric machine.

10. A resistance welding method where a plurality of members to be welded which include at least one member to be welded on which a projection (3) is formed are formed into an integral body by projection welding, wherein as the member to be welded on which the projection (3) is formed, a member to be welded according to any of claims 1 to 2 is used, and
the plurality of members to be welded are made to overlap with each other with the projection (3) arranged inside and, thereafter, electricity is supplied between the plurality of members to be welded via the projection (3), and a pressurizing force is applied to the projection (3).

11. The resistance welding method according to claim 10, wherein a fixed electrode (31) and a movable electrode (30) which are arranged opposite to each other are respectively brought into pressure contact with both front and back surfaces of a laminated body constituted by overlapping the plurality of members to be welded to each other, electricity is supplied between the both electrodes, and a pressurizing force is applied to the projection (3) by driving the movable electrode (30).

## Patentansprüche

1. Zu schweißendes Element (1B, 1C), bei dem an einem aus einer Metallplatte gebildeten Rohmaterial (1) ein Buckel (3) gebildet ist, wobei
an einer Oberfläche des Rohmaterials (1) ein ausgesparter Abschnitt (2) gebildet ist,
der Buckel (3) an einer unteren Oberfläche des ausgesparten Abschnitts (2) gebildet ist,
an einer hinteren Oberfläche des ausgesparten Abschnitts (2) an einer Stelle, die einem distalen Ende des Buckels (3) entspricht, eine Vertiefung (4) gebildet ist,
wenn eine Plattendicke des Rohmaterials (1) in dem Inneren des ausgesparten Abschnitts (2) und um das Randgebiet des Buckels (3) als D2 angenommen wird und eine Plattendicke des Rohmaterials (1) außerhalb des ausgesparten Abschnitts (2) als D3 angenommen wird, die Plattendicken der jeweiligen Abschnitte die Beziehung D2 < D3 aufweisen, und wenn eine Höhe von einem unteren Abschnitt der Vertiefung (4) zu einem distalen Ende des Buckels (3) als D1 angenommen wird, die Beziehung zwischen der Höhe D1 und der Plattendicke D2 des Rohmaterials (1) im dem Inneren des ausgesparten Abschnitts (2) und um das Randgebiet des Buckels (3) auf D1 > D2 eingestellt wird, wobei
das zu schweißende Element (1B, 1C) **dadurch gekennzeichnet ist, dass**
ein distales Ende des Buckels (3) in dem Inneren des ausgesparten Abschnitts (2) angeordnet ist.

2. Zu schweißendes Element (1B, 1C) nach Anspruch 1, wobei ein distales Ende des Buckels (3) bis außerhalb des ausgesparten Abschnitts (2) vorsteht.

3. Widerstandsschweißstruktur, wobei das zu schweißende Element (1B, 1C) nach Anspruch 1 und ein anderes zu schweißende Element (5), das mit dem zu schweißenden Element (1B, 1C) nach Anspruch 1 gefügt wird, über den Buckel (3) miteinander gefügt werden.

4. Widerstandsschweißstruktur nach Anspruch 3, wobei ein zu schweißendes Element, an dem der Buckel (3) nicht gebildet ist, als das andere zu schweißende Element (5) verwendet wird und wobei der Buckel (3) mit einer Oberfläche des anderen zu schweißenden Elements (5), an dem der Buckel nicht gebildet ist, gefügt wird.

5. Widerstandsschweißstruktur nach Anspruch 3, wobei das zu schweißende Element (1B, 1C), an dem der Buckel (3) gebildet ist, als das andere zu schweißende Element (5) verwendet wird und wobei die Vorsprünge (3), die an den jeweiligen zu schweißenden Elementen gebildet sind, miteinander gefügt werden.

6. Widerstandsschweißstruktur nach Anspruch 3, wobei ein zu schweißendes Element, bei dem der Buckel (3) an einer unteren Oberfläche des ausgesparten Abschnitts (2) gebildet ist und ein distales Ende des Buckels (3) in dem Inneren des ausgesparten Abschnitts (2) angeordnet ist, als das zu schweißende Element, an dem der Buckel (3) gebildet ist, verwendet wird, ein zu schweißendes Element, an dem ein gekrümmter Abschnitt (7), der in das Innere des ausgesparten Abschnitts (2) eingeführt werden kann, gebildet ist, als das andere zu schweißende Element (5) verwendet wird, und der Buckel (3) mit einer Außenoberfläche (8) des gekrümmten Abschnitts (7) in dem ausgesparten Abschnitt (2) gefügt wird.

7. Widerstandsschweißstruktur nach einem der Ansprüche 3 bis 6, wobei die Widerstandsschweißstruktur mehrere zu schweißende Elemente (9), wovon an keinem der Buckel (3) gebildet ist, enthält, und wobei das zu schweißende Element, an dem der Buckel (3) gebildet ist, und das zu schweißende Element, an dem der Buckel (3) nicht gebildet ist und das mit dem zu schweißenden Element, an dem der Buckel (3) gebildet ist, in Kontakt gebracht wird, über den Buckel (3) miteinander gefügt werden und wobei die zu schweißenden Elemente, wovon an keinem der Buckel (3) gebildet ist, an einer Stelle, die dem Buckel (3) gegenüberliegt, punktartig miteinander gefügt werden.

8. Batterie, die ein Batteriegehäuse (101) und eine Leitung (110) des negativen Pols umfasst, und Widerstandsschweißstruktur nach einem der Ansprüche 3 bis 6, wobei die mehreren zu schweißenden Elemente (9) das Batteriegehäuse (101) und die Leitung (110) des negativen Pols, die eine Batterie (111) bilden, sind.

9. Dynamoelektrische Maschine, die einen Polkern (202) und einen Radialventilator (201) umfasst, und Widerstandsschweißstruktur nach einem der Ansprüche 5 bis 6, wobei die mehreren zu schweißenden Elemente (9) der Polkern (202) und der Radialventilator (201) zum Kühlen, die eine dynamoelektrische Maschine bilden, sind.

10. Widerstandsschweißverfahren, in dem mehrere zu schweißende Elemente, die wenigstens ein zu schweißendes Element, an dem ein Buckel (3) gebildet ist, enthalten, durch Buckelschweißen zu einem einteiligen Körper gebildet werden, wobei als das zu schweißende Element, an dem der Buckel (3) gebildet ist, ein zu schweißendes Element nach einem der Ansprüche 1 bis 2 verwendet wird, und
die mehreren zu schweißenden Elemente mit dem innerhalb angeordneten Buckel (3) miteinander zum Überlappen gebracht werden und danach zwischen den mehreren zu schweißenden Elementen über den Buckel (3) Elektrizität zugeführt wird und auf den Buckel (3) eine Druckkraft ausgeübt wird.

11. Widerstandsschweißverfahren nach Anspruch 10, wobei eine feste Elektrode (31) und eine bewegliche Elektrode (30), die einander gegenüberliegend angeordnet sind, jeweils sowohl mit der vorderen als auch mit der hinteren Oberfläche eines Schichtkörpers, der durch Überlappen der mehreren zu schweißenden Elemente miteinander gebildet ist, in Druckkontakt gebracht werden, zwischen den beiden Elektroden Elektrizität zugeführt wird und durch Antreiben der beweglichen Elektrode (30) auf den Buckel (3) eine Druckkraft ausgeübt wird.

## Revendications

1. Élément à souder (1B, 1C) où une projection (3) est formée sur un matériau brut (1) formé d'une plaque de métal, dans lequel une portion évidée (2) est formée sur une surface du matériau brut (1) ;
la projection (3) est formée sur une surface de fond de la portion évidée (2), une encoche (4) est formée sur une surface arrière de la portion évidée (2) à une position correspondant à une extrémité distale de la projection (3), et à supposer une épaisseur de plaque du matériau brut (1) dans l'intérieur de la portion évidée (2) et autour de la périphérie de la projection (3) comme étant D2 et une épaisseur de plaque du matériau brut (1) à l'extérieur de la portion évidée (2) comme étant D3, les épaisseurs de plaque des portions respectives satisfont à la relation D2 < D3, et à supposer une hauteur depuis une portion de fond de l'encoche (4) jusqu'à une extrémité distale de la projection (3) comme étant D1, la relation entre la hauteur D1 et l'épaisseur de plaque D2 du matériau brut (1) dans l'intérieur de la portion évidée (2) et autour de la périphérie de la projection (3) est définie comme étant D1 > D2, dans lequel
l'élément à souder (1B, 1C) est **caractérisé en ce que** :
une extrémité distale de la projection (3) est agencée dans l'intérieur de la portion évidée (2).

2. Élément à souder (1B, 1C) selon la revendication 1, dans lequel une extrémité distale de la projection (3) se projette vers l'extérieur de la portion évidée (2).

3. Structure de soudage par résistance, dans laquelle l'élément à souder (1B, 1C) selon la revendication 1 et un autre élément à souder (5) qui est joint à l'élément à souder (1B, 1C) selon la revendication 1 sont joints l'un à l'autre via la projection (3).

4. Structure de soudage par résistance selon la revendication 3, dans lequel un élément à souder sur lequel la projection (3) n'est pas formée est utilisé comme étant l'autre élément à souder (5), et la projection (3) est jointe à une surface de l'autre élément à souder (5) sur lequel la projection (3) n'est pas formée.

5. Structure de soudage par résistance selon la revendication 3, dans lequel l'élément à souder (1B, 1C) sur lequel la projection (3) est formée est utilisé comme étant l'autre élément à souder (5), et les projections (3) qui sont formées sur les éléments à souder respectifs sont jointes les unes aux autres.

6. Structure de soudage par résistance selon la revendication 3, dans laquelle un élément à souder où la projection (3) est formée sur une surface de fond de la portion évidée (2) et où une extrémité distale de la projection (3) est agencée est utilisé comme étant l'élément à souder sur lequel la projection est formée (3), un élément à souder sur lequel est formée une portion incurvée (7) qui peut être insérée dans l'intérieur de la portion évidée (2) est utilisé comme étant l'autre élément à souder (5), et la projection (3) est jointe à une surface extérieure (8) de la portion incurvée (7) dans la portion évidée (2).

7. Structure de soudage par résistance selon l'une quelconque des revendications 3 à 6, dans laquelle la structure de soudage par résistance inclut une pluralité d'éléments à souder (9) sur chacun desquels la projection (3) n'est pas formée, et l'élément à souder sur lequel la projection (3) est formée et l'élément à souder sur lequel la projection (3) n'est pas formée et qui est amené en contact avec l'élément à souder sur lequel la projection (3) est formée sont joints l'un à l'autre via la projection (3), et les éléments à souder sur chacun desquels la projection (3) n'est pas formée sont joints les uns aux autres de manière ponctuelle à une position faisant face à la projection (3).

8. Batterie comprenant un boîtier de batterie (101) et un fil de pôle négatif (110) et une structure de soudage par résistance selon l'une quelconque des revendications 3 à 6, dans laquelle la pluralité d'éléments à souder (9) sont le boîtier de batterie (101) et le fil de pôle négatif (110) qui constituent une batterie (111).

9. Machine dynamo-électrique comprenant un noyau de pôle (202) et un ventilateur centrifuge (201) et une structure de soudage par résistance selon l'une quelconque des revendications 5 à 6, dans laquelle la pluralité d'éléments à souder (9) sont le noyau de pôle (202) et le ventilateur centrifuge (201) destiné à un refroidissement, qui constituent une machine dynamo-électrique.

10. Procédé de soudage par résistance où une pluralité d'éléments à souder qui incluent au moins un élément à souder sur lequel une projection (3) est formée sont formés en un corps intégral via un soudage par projection, dans lequel un élément à souder selon l'une quelconque des revendications 1 à 2 est utilisé comme élément à souder sur lequel la projection (3) est formée, et la pluralité d'éléments à souder sont amenés à se chevaucher les uns les autres avec la projection (3) agencée à l'intérieur, et puis, de l'électricité est alimentée entre la pluralité d'éléments à souder via la projection (3), et une force de pressurisation est appliquée sur la projection (3).

11. Procédé de soudage par résistance selon la revendication 10, dans lequel une électrode fixe (31) et une électrode mobile (30) qui sont agencées à l'opposé l'une de l'autre sont amenées respectivement en contact de pression à la fois avec la surface avant et la surface arrière d'un corps stratifié constitué par le chevauchement de la pluralité d'éléments à souder les uns avec les autres, de l'électricité est alimentée entre les deux électrodes, et une force est appliquée sur la projection (3) par entraînement de l'électrode mobile (30).
